# EUROPÄISCHE PATENTSCHRIFT

(11) **EP 2 310 693 B1**
(45) Veröffentlichungstag und Bekanntmachung des Hinweises auf die Patenterteilung: **17.12.2014**
(21) Anmeldenummer: 09780624.4
(22) Anmeldetag: 15.07.2009
(51) Int. Cl.: F24C 15/16, F16B 2/02, F16B 9/02

(54) **SCHNELLBEFESTIGUNGSELEMENT**
QUICK-ACTION FASTENING ELEMENT
ÉLÉMENT DE FIXATION RAPIDE

(30) Priorität: 30.07.2008 DE 202008010187 U
(43) Veröffentlichungstag der Anmeldung: 20.04.2011
(73) Patentinhaber: Paul Hettich GmbH & Co. KG, 32278 Kirchlengern (DE)
(72) Erfinder: BUDDE, Sven, 32312 Lübbecke (DE)
(74) Vertreter: Dantz, Jan Henning
(86) Internationale Anmeldenummer: PCT/EP2009/059054
(87) Internationale Veröffentlichungsnummer: WO 2010/012591

(56) Entgegenhaltungen:
- DE-U1-202006 002 251

## Beschreibung

Die vorliegende Erfindung betrifft ein Schnellbefestigungselement zur Befestigung einer Führungsschiene an einer Stange eines gitterartigen Seitenteils, insbesondere für Backöfen, nach dem Oberbegriff des Anspruches 1.

Die DE 20 2006 002 251 U1 offenbart eine Schnellbefestigungsvorrichtung nach dem Oberbegriff des Anspruches 1, zur Festlegung einer Führungsschiene einer Ausziehführung an einem gitterartigen Seitenteil, wobei klammerartige Halteabschnitte vorgesehen sind, die eine Stange zumindest teilweise umgreifen. Ferner sind zur Festlegung der Schnellbefestigungsvorrichtung Rastelemente vorgesehen, die eine Stange hintergreifen, so dass die Führungsschiene rastend an der Stange festlegbar ist. Das Rastelement kann dabei manuell aus der Befestigungslage gebogen werden, um die Schnellbefestigungsvorrichtung zu demontieren. Dabei kann es passieren, dass durch ein Überbiegen das Rastelement danach nicht wieder vollständig in die Befestigungslage zurückkehrt und dadurch seine Funktionsfähigkeit verliert. Zudem besteht ein Verletzungsrisiko durch das unkontrollierte Verschwenken des Rastelementes.

Aus der DE 20 2005 020 458 U1 ist ein Schnellbefestigungselement bekannt, das zur Festlegung einer Ausziehführung an einer Stange ausgebildet ist, wobei die Stange sowohl in Längsrichtung als auch an einem abgebogenen Endabschnitt umgriffen ist. Auch hier sind zur Sicherung der Schnellbefestigungselemente Rastmittel vorgesehen, die eine Stange federnd hintergreifen. Beim Lösen der Rastmittel für die Demontage besteht auch hier die Gefahr eines nachhaltigen Verbiegens und dadurch bedingt ist ein sicherer Halt bei einer erneuten Montage nicht gewährleistet.

Es ist daher Aufgabe der vorliegenden Erfindung ein Schnellbefestigungselement zu schaffen, das die genannten Nachteile beseitigt und eine einfache Montage sowie Demontage einer Führungsschiene an einer Stange eines gitterartigen Seitenteils ermöglicht.

Diese Aufgabe wird mit einem Schnellbefestigungselement mit den Merkmalen des Anspruches 1 gelöst.

Erfindungsgemäß ist an dem Schnellbefestigungselement ein Anschlag zur Begrenzung des Schwenkweges des Rastelementes vorgesehen, so dass ein Überbiegen und die damit verbundene Überschreitung des elastischen Federbereichs des Schnellbefestigungselementes sicher vermieden werden kann. Das Rastelement ist nur um einen vorbestimmten Weg verschwenkbar ausgebildet, so dass eine sichere Handhabung gewährleistet ist. Zudem kann durch die Ausbildung eines Anschlages auch das Verletzungsrisiko minimiert werden.

Gemäß einer bevorzugten Ausgestaltung der Erfindung ist der Anschlag so angeordnet, dass das Rastelement in einem elastischen Bereich federnd verschwenkbar ist. Dadurch muss der Benutzer sich keine Gedanken machen, wie weit das Rastelement verschwenkt werden darf. Das Rastelement kann dabei integral mit dem Schnellbefestigungselement ausgebildet sein, aber auch eine Ausbildung als separates Bauteil ist möglich. Vorzugsweise ist der Anschlag als Steg ausgebildet, der integral mit der ersten oder zweiten Klammer ausgebildet ist. Dadurch wird die Herstellung vereinfacht, da das Schnellbefestigungselement als einfaches Stanzund Biegeteil aus einem Metallblech hergestellt sein kann.

Um ein Abziehen des Schnellbefestigungselementes in eine Richtung parallel zu einer dem abgebogenen Endabschnitts der Stange zu verhindern, kann an dem Rastelement ein Vorsprung ausgebildet sein, der die Stange hintergreift.

Um eine einfache Betätigung des Rastelementes zu ermöglichen, kann an diesem ein Vorsprung ausgebildet sein, der die Öffnung an der ersten oder zweiten Klammer durchgreift. Dieser Vorsprung kann dabei als Griffabschnitt dienen, wobei die maximale Wegstrecke zum Verschwenken des Rastelementes durch die Länge der Öffnung vorgegeben ist, wenn das Rastelement mittels des Vorsprunges verschwenkt wird. Dadurch kann auch die Betätigung des Rastelementes über den Vorsprung auf eine Innenseite an einem Seitenteil eines Backofens verlagert werden, also der Benutzer muss nicht mehr in den Spalt zwischen Schnellbefestigungselement und Seitenwand des Backofens eingreifen.

Für eine einfache Montage des Rastelementes kann ein Griffabschnitt ausgebildet sein, der die Positionierung des Schnellbefestigungselementes vereinfacht. Der Griffabschnitt kann zusätzlich mit einem aus hochtemperaturbeständigem Kunststoff gearbeiteten Griffelement versehen werden.

Dabei ist bei dicht an der Seitenwand anliegenden Stangen vorteilhaft das gitterartige Seitenteil vor der Demontage der Auszugsführungen aus dem Backofen zu entnehmen.

Zur Festlegung der Auszugsführung am gitterartigen Seitenteil reicht die Verwendung eines erfindungsgemäßen Schnellbefestigungselementes. An der dem Schnellbefestigungselement in Auszugsrichtung gegenüberliegen Seite genügt es, ein die Stange umgreifendes Element zu verwenden.

Die Erfindung wird nachfolgend anhand mehrerer Ausführungsbeispiele mit Bezug auf die beigefügten Zeichnungen näher erläutert. Es zeigen:

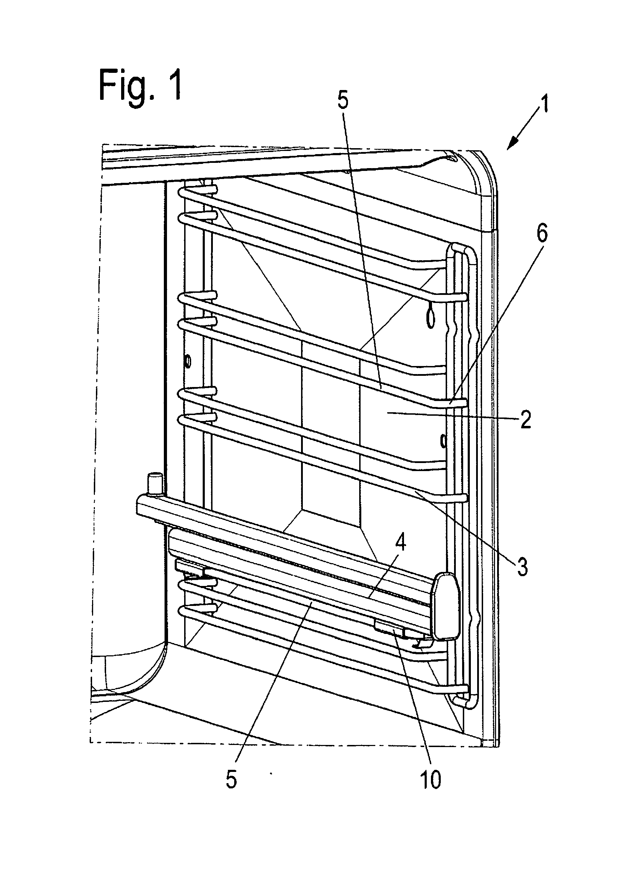

- Figur 1: eine perspektivische Ansicht einer Seitenwand eines Backofens mit einem Seitenteil, an dem ein Schnellbefestigungselement montiert ist;
- Figuren 2A bis 2G: mehrere Ansichten eines erfindungsgemäßen Schnellbefestigungselementes bei der Montage an einem Seitenteil;
- Figuren 3A bis 11B: mehrere Ansichten unterschiedlicher Ausführungsformen von Schnellbefestigungselementen.

An einem Backofen 1 ist an einer Seitenwand 2 ein gitterartiges Seitenteil 3 festgelegt, an dem Backbleche, Roste oder andere Gargutträger aufgelegt bzw. eingeschoben werden können. An zumindest einer Stange 5 des Seitenteils 3 ist eine Ausziehführung 4 vorgesehen, die über zwei erfindungsgemäße Schnellbefestigungselemente 10 festgelegt ist.

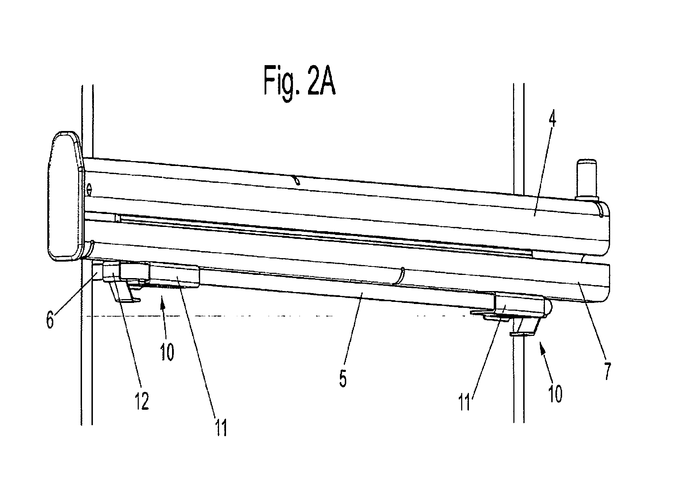

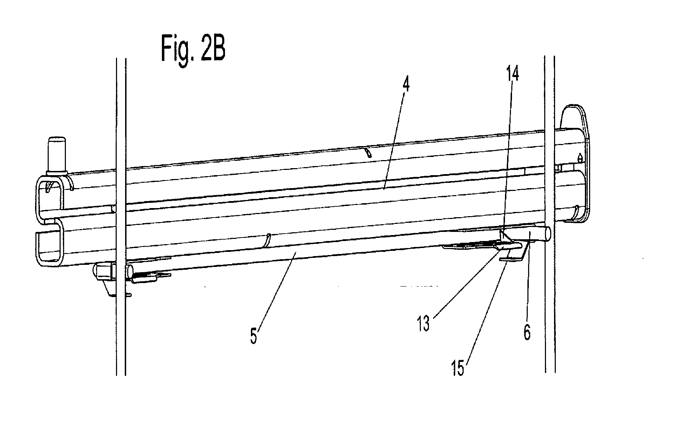

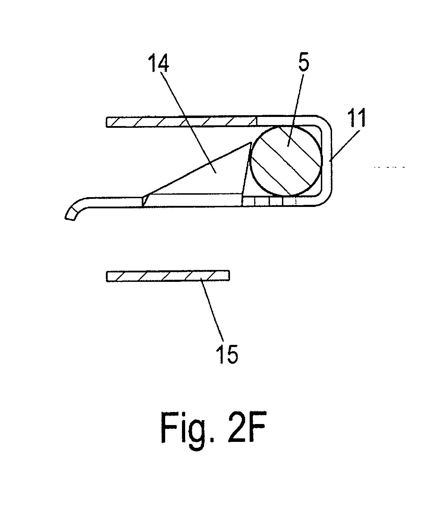

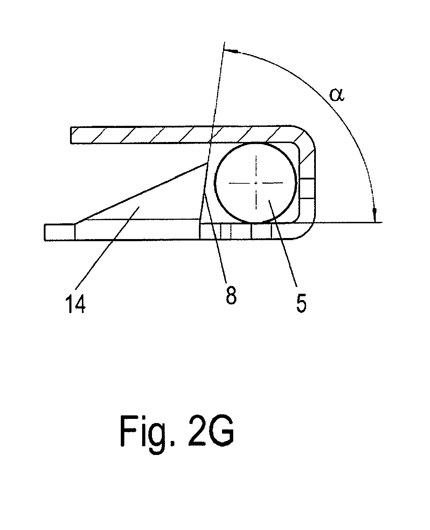

Wie in der Detailansicht der Figuren 2A und 2B erkennbar ist, sind zwei Schnellbefestigungselemente 10 an einer Stange 5 festgelegt, wobei die Stange 5 endseitig jeweils einen abgebogenen Endabschnitt 6 aufweist. Jedes Befestigungselement 10 umgreift mit einer ersten Klammer 11 die Stange 5 im Wesentlichen U-förmig. An dem abgebogenen Endabschnitt 6 ist eine zweite Klammer 12 des Schnellbefestigungselementes 10 vorgesehen, die diesen U-förmig umgreift. Um das Schnellbefestigungselement 10 an der Stange 5 zu sichern, ist ein Rastelement 13 in Form einer verschwenkbaren Rastzunge vorgesehen, an der ein nach oben hervorstehender Vorsprung 14 ausgebildet ist. Der Vorsprung 14 verhindert, dass das Schnellbefestigungselement 10 in der horizontalen Ebene der abgebogenen Endabschnitte 6 abgezogen werden kann. Der Vorsprung 14 bildet zwischen einer Anlagekante 8 benachbart zu der Stange 5 und der Horizontalen einen stumpfen Winkel α, vorzugweise zwischen 75° und 88°, um eine sichere Anlage der Stange 5 zu gewährleisten.

An dem Schnellbefestigungselement 10 ist ferner ein Anschlag 15 vorgesehen, der beabstandet von dem verschwenkbaren Rastelement 13 angeordnet ist und den Schwenkweg des Rastelementes 13 begrenzt.

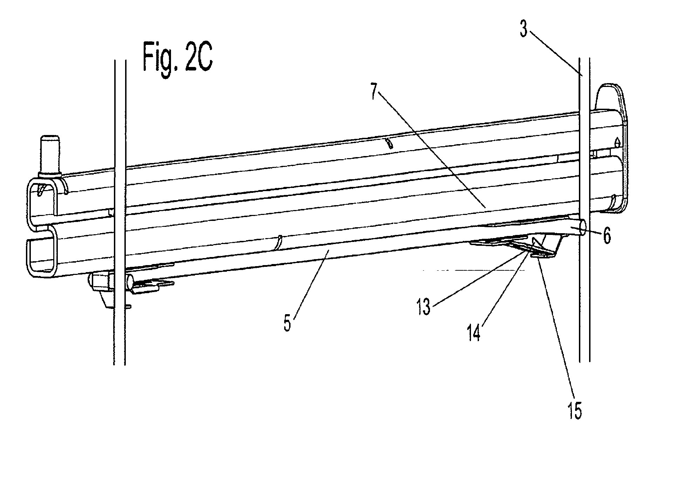

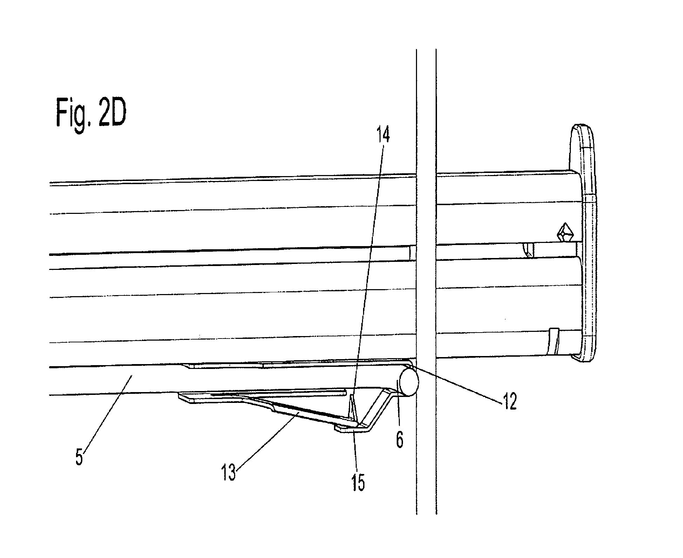

In den Figuren 2C und 2D ist eine Position eines Rastelementes 13 gezeigt, bei dem dieses manuell oder durch ein Werkzeug nach unten verschwenkt wurde, bis es an dem Anschlag 15 anliegt. In der nach unten geschwenkten Position liegt der nach oben hervorstehende Vorsprung 14 unterhalb der Stange 5, so dass das Schnellbefestigungselement 10 in der horizontalen Ebene des abgebogenen Endabschnitts 6 von der Stange 5 gelöst werden kann.

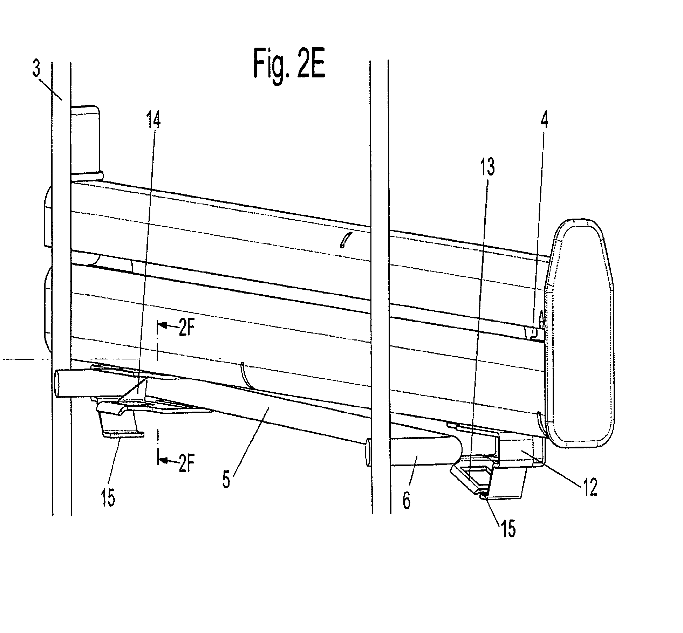

Wie in Figur 2E gezeigt ist, kann durch das nacheinander erfolgende Lösen beider Schnellbefestigungselemente 10 die Ausziehführung 4 von dem gitterartigen Seitenteil 3 abgenommenen werden.

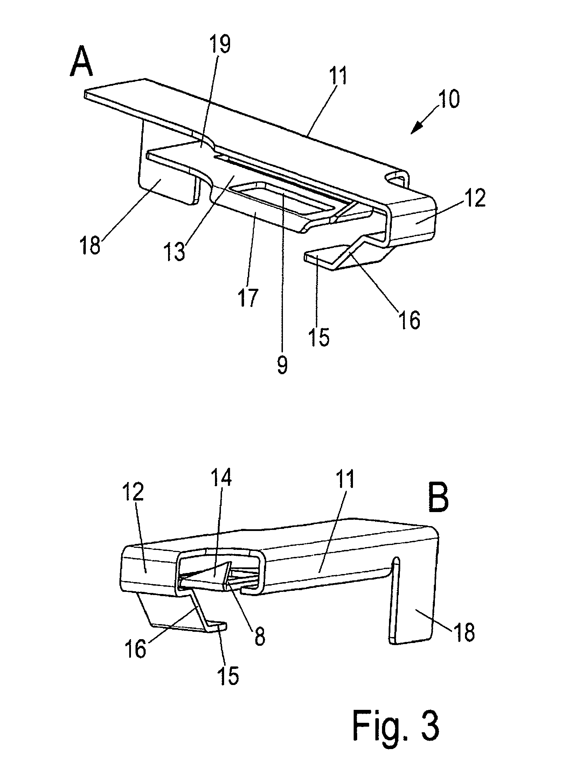

In den Figuren 3A und 3B ist das Schnellbefestigungselement 10 im Detail dargestellt. Das federnde Rastelement 13 ist über einen Steg 19 mit der ersten Klammer 11 verbunden, die die Stange 5 U-förmig umgreift. An der zweiten Klammer 12, die den gebogenen Endabschnitt 6 U-förmig umgreift, ist ein Steg 16 ausgebildet, der winklig zu der Horizontalen angeordnet ist und an einem Ende den Anschlag 15 ausbildet. An dem Rastelement 13 ist ferner eine abgewinkelte Griffleiste 17 vorgesehen, die den Abschnitt vom elastischen Biegebereich bis zum Rastvorsprung 14 versteift und die Handhabung erleichtert. Um die Montage des Schnellbefestigungselementes 10 auch an der Seitenfläche der Ausziehführung zu ermöglichen, ist an der ersten Klammer 11 ein plattenförmiger Befestigungsabschnitt 18 ausgebildet, der nach unten hervorsteht und zur optionalen seitlichen Festlegung an der Ausziehführung 4 dient.

Eine rechteckige Aussparung 9 in dem Rastelement 13 ermöglicht die Zugänglichkeit für eine Schweißvorrichtung, um das Rastelement 13 mit der Auszugsführung durch Schweißen zu verbinden. Es kann außerdem zur Aufnahme eines separaten, nicht dargestellten Griffstückes dienen.

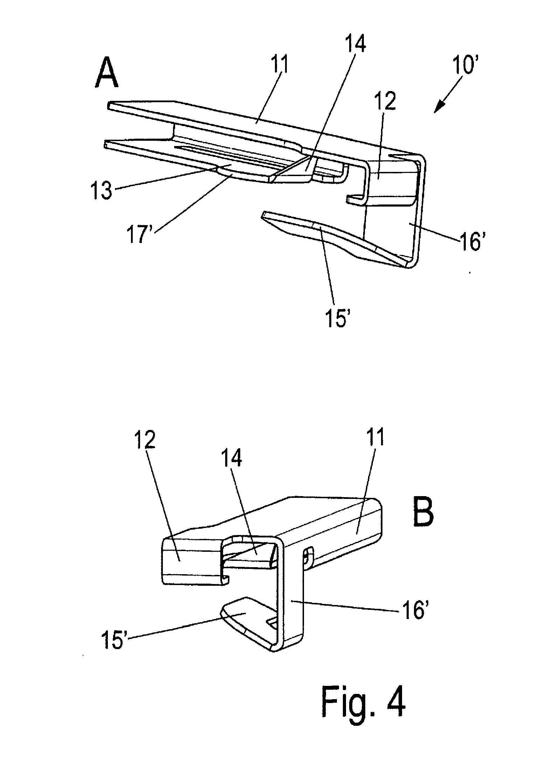

In Figur 4A und 4B ist eine zweite Ausführungsform eines erfindungsgemäßen Schnellbefestigungselementes 10' gezeigt, bei dem anders als bei dem ersten Ausführungsbeispiel ein Anschlag 15' nicht integral mit der zweiten Klammer 12 sondern mit der ersten Klammer 11 ausgebildet ist. Hierfür erstreckt sich ein Steg 16' von der Klammer 11 nach unten und trägt den Anschlag 15'. Ferner ist an dem Rastelement 13 statt der abgewinkelten Griffleiste ein verbreiteter hervorstehender Bereich 17' als Griffabschnitt vorgesehen. Der Anschlag 15' ist hier nicht parallel zur Ebene der Stange 5 angeordnet, so dass nur die Vorderkante von 15' den Schwenkweg des Rastelementes 13 begrenzt.

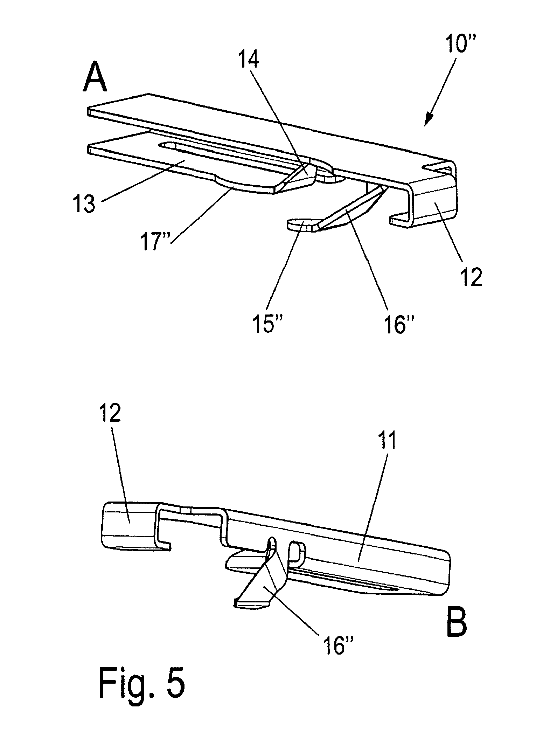

Bei dem in Figur 5A und 5B gezeigten Ausführungsbeispiel ist ein Anschlag 15" an dem Schnellbefestigungselement 10" vorgesehen, der integral mit der Klammer 11 ausgebildet ist. Der Anschlag 15" ist innerhalb der Klammer 11 angeordnet und daher über einen verdrehten Steg 16" mit der Klammer 11 verbunden auch um möglichst gering in den Garraum hereinzuragen.

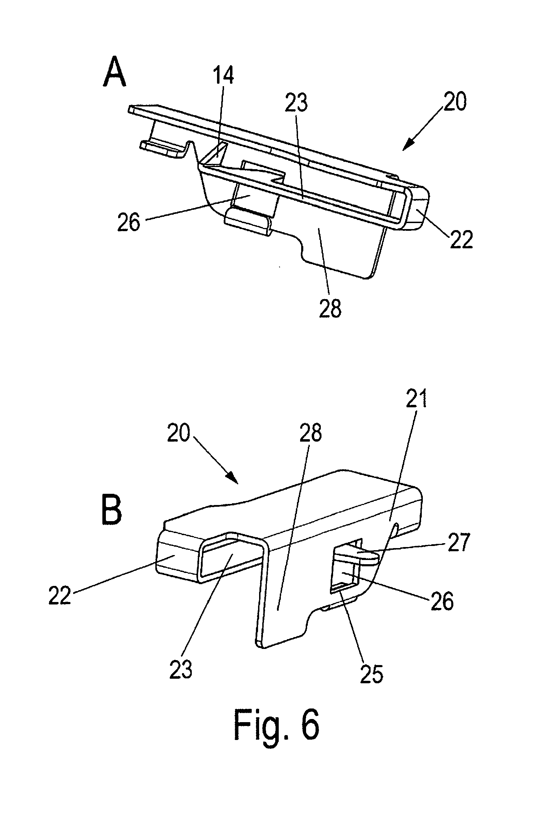

In Figuren 6A und 6B ist eine Ausführungsform eines Schnellbefestigungselementes 20 gezeigt, bei der zur Festlegung an der Stange eine erste Klammer 21 mit U-förmigen Querschnitt sowie eine zweite Klammer 22 mit U-förmigen Querschnitt ausgebildet sind. Integral mit der zweiten Klammer 22 ist ein stegförmiges Rastelement 23 ausgebildet, an dem ein nach oben gerichteter Vorsprung 14 ausgeformt ist, der benachbart zu der Stange 5 anliegt. Ferner ist an dem Befestigungselement 23 ein seitlicher Vorsprung 27 ausgebildet, der eine Öffnung 26 durchgreift, die an einer nach unten gerichteten Platte 28 angeordnet ist. Die Öffnung 26 ist als Langloch ausgebildet und der untere Rand 25 der Öffnung 26 dient dabei als Anschlag. Durch die Öffnung 26 steht ein Griffabschnitt 27 hervor, der die Betätigung des Rastelementes 23 vereinfacht. Im Hinblick auf die Einbausituation an einem Seitenteil 3, beispielsweise bei einem Backofen, kann die Betätigung des Rastelementes 23 von der Seite zur Garraummitte aus erfolgen und der Benutzer muss nicht mehr zwischen eine Seitenwand 2 des Backofens und die Ausziehführung 4 eingreifen, bzw. je nach Ausführung des gitterartigen Seitenteils das gitterartige Seitenteil aus dem Backofen entnehmen. Die Platte 28 verdeckt die Stange 5 bis an den Endabschnitt 6 reichend.

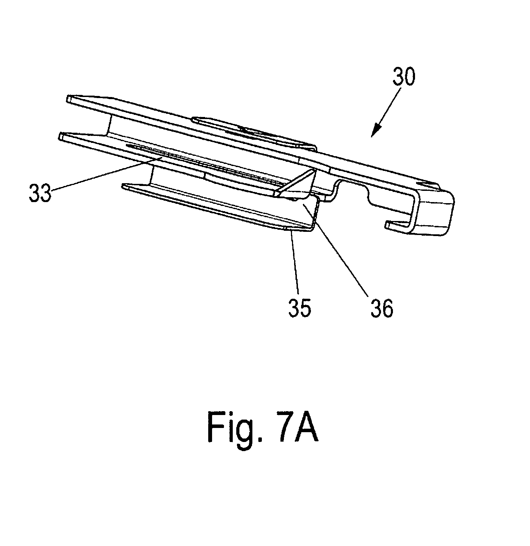

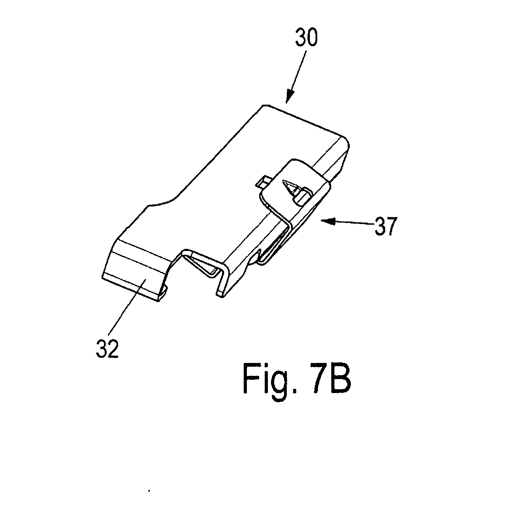

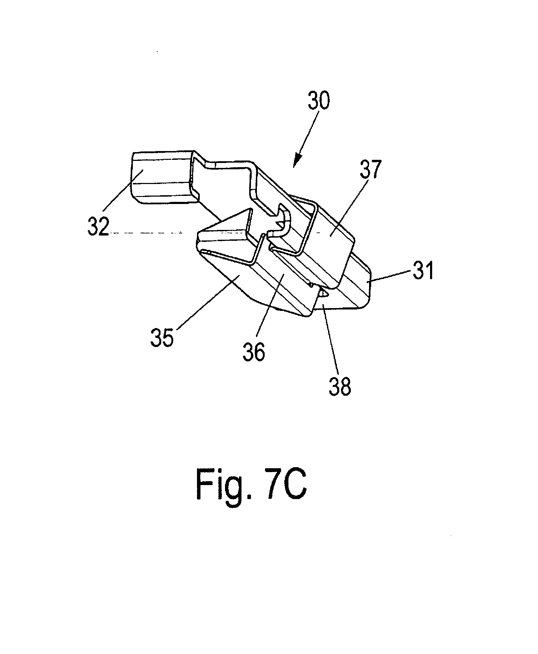

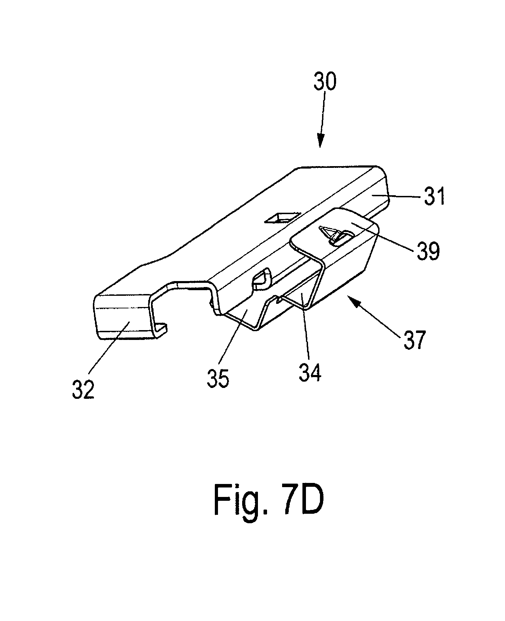

In Figur 7A bis 7D ist eine weitere Ausführungsform eines Schnellbefestigungselementes 30 gezeigt, das wiederum eine erste Klammer 31 zur Festlegung an der Stange 5 sowie eine zweite Klammer 32 zur Festlegung an dem abgebogenen Endabschnitt 6 aufweist. Ein stegförmiges Rastelement 33 ist über einen Verbindungssteg 38 an einer Seite mit der Klammer 31 verbunden. Unterhalb des Rastelementes 33 ist ein Anschlag 35 vorgesehen, der jedoch nicht integral mit einer der Klammer 31 oder 32 ausgebildet ist, sondern durch ein separates aufsteckbares Bauteil vorgesehen ist. Der Anschlag 35 ist über eine Wand 36 mit einem Halteelement 37 verbunden, der die erste Klammer 31 umgreift. Das Halteelement 37 kann dabei über die Schenkel 34, 39 mit der Klammer 31 geschnappt sein. Auch andere Befestigungsarten können eingesetzt werden, beispielsweise Kleben oder Schweißen.

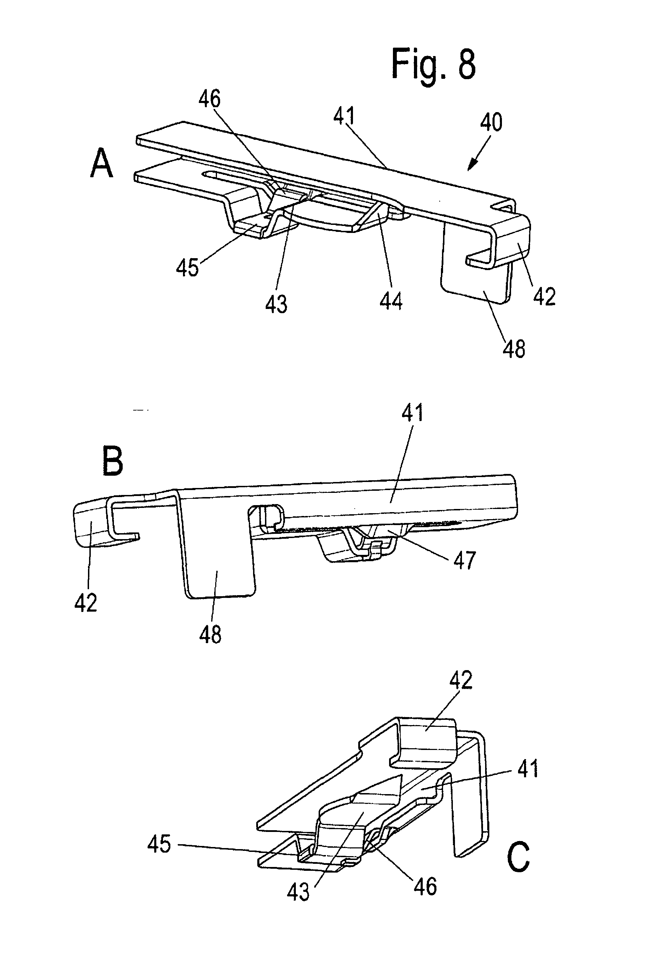

In den Figuren 8A bis 8C ist eine weitere Ausführungsform eines Schnellbefestigungselementes 40 gezeigt, bei dem eine erste Klammer 41 zum Umgreifen einer Stange 5 und eine zweite Klammer 42 zum Umgreifen eines gebogenen Endabschnittes 6 vorgesehen sind. An dem Schnellbefestigungselement 40 ist ein bewegbares Rastelement 43 ausgebildet, an dem ein nach oben gerichteter Vorsprung 44 angeformt ist. In einem mittleren Bereich des Rastelementes 43 ist eine Vertiefung ausgebildet, in die ein Clip 45 aufgeschoben ist. Der Clip 45 bildet mit einem Endabschnitt 46 einen Anschlag aus, der in eine Vertiefung 47 an der Klammer 41 einfügbar ist. Der Clip 45 kann dabei auch integral mit dem Befestigungselement 43 ausgebildet sein. Bei einem Verschwenken des Rastelementes 43 schlägt der Endabschnitt 46 an der Vertiefung 47 an, so dass der maximale Verschwenkwege begrenzt ist. Ferner ist an der ersten Klammer 41 noch ein plattenförmiger Befestigungsabschnitt 48 ausgebildet, er dient zur optionalen seitlichen Festlegung an der Ausziehführung 4.

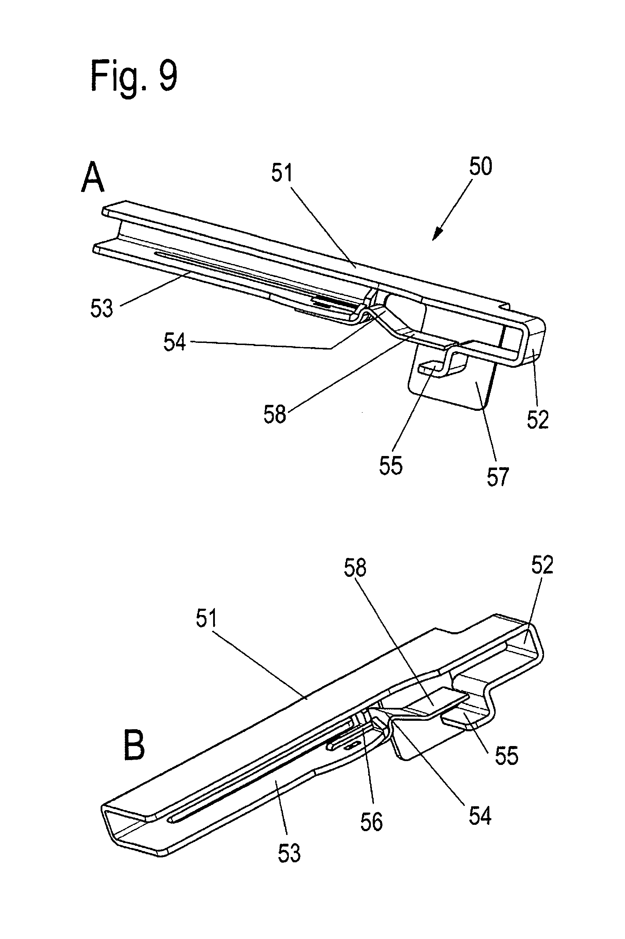

In den Figuren 9A und 9B ist eine weitere Ausführungsform eines Schnellbefestigungselementes 50 gezeigt, das eine erste Klammer 51 und eine zweite Klammer 52 umfasst. Ferner ist ein stegförmiges Rastelement 53 vorgesehen, an dem ein separater Endabschnitt 58 befestigt ist, der bis zu einem Anschlag 55 reicht, der integral mit der zweiten Klammer 52 ausgebildet ist. Bei diesem Ausführungsbeispiel ist der nach oben gerichtete Vorsprung nicht endseitig an dem Rastelement 53 sondern in einem mittleren Bereich ausgebildet. Eine Stufe 54 ist durch ein Biegen des Steges des Rastelementes 53 hergestellt. Ein Befestigungssteg 56 ist vorgesehen, um die Verbindung mit dem Rastelement 53 herzustellen. Benachbart zu der ersten Klammer 51 ist noch ein plattenförmiger Befestigungsabschnitt 57 vorgesehen, der zur optionalen seitlichen Festlegung an der Ausziehführung 4 dient.

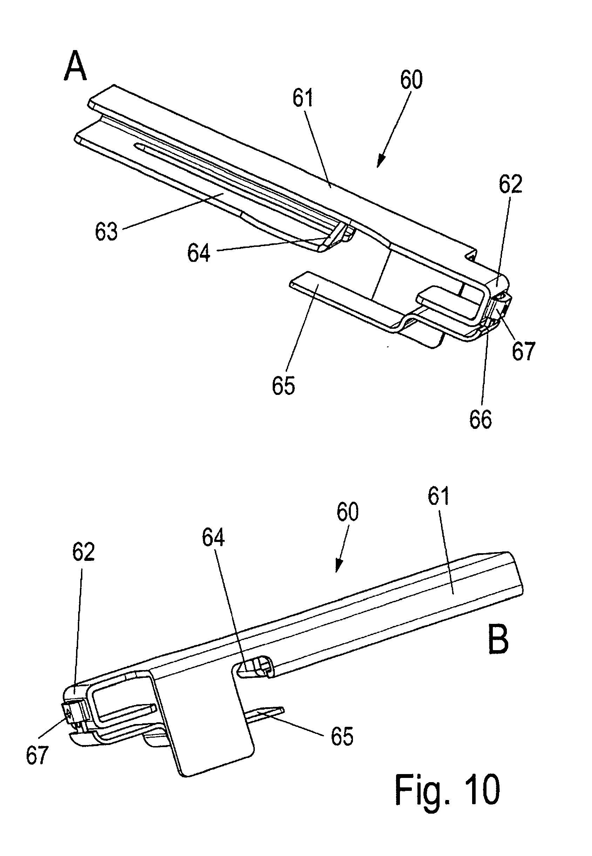

Bei dem in Figur 10A und 10B gezeigten Ausführungsbeispiel ist ein Schnellbefestigungselement 60 vorgesehen, bei dem eine erste Klammer 61 und eine zweite Klammer 62 vorgesehen sind. Zur Ausbildung eines Anschlages 65 für ein Rastelement 63 ist an der zweiten Klammer 62 eine U-förmige Aufnahme 67 gebildet, in die ein Steg 66 eingefügt ist. Der Steg 66 ist integral mit dem Anschlag 65 ausgebildet.

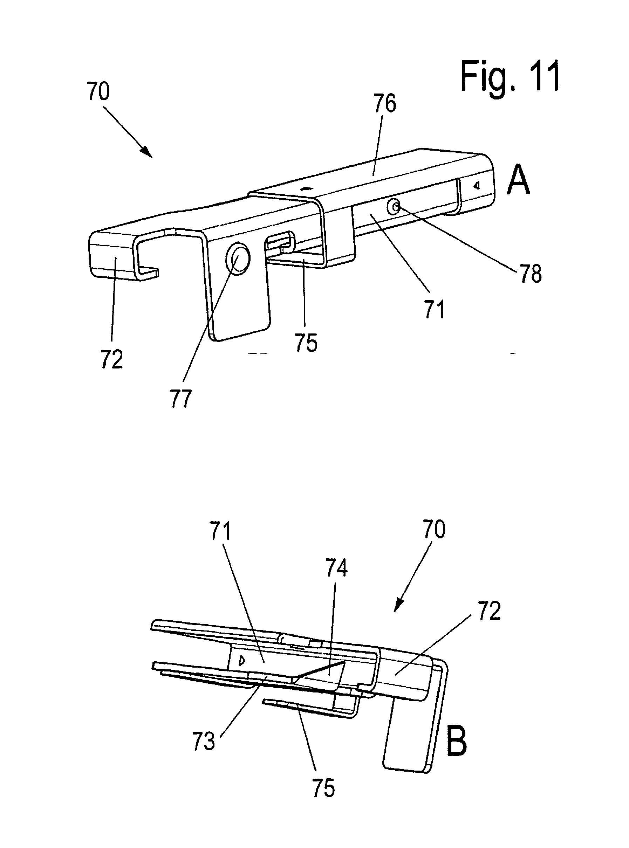

Bei dem in Figur 11A und 11B gezeigten Schnellbefestigungselement 70 ist eine erste Klammer 71 zur Festlegung an der Stange 5 und eine zweite Klammer 72 zur Festlegung an dem abgebogenen Endabschnitt 6 vorgesehen. Zur Ausbildung eines Anschlages 75 ist ein Halteelement 76 vorgesehen, das die erste Klammer 71 umgreift. Das Halteelement 76 kann auch an der ersten Klammer 71 durch Klemmen, Kleben oder andere Befestigungsmittel festgelegt sein. Der Anschlag 75 ist beabstandet unterhalb eines Rastelementes 73 vorgesehen, das einen nach oben gerichteten Vorsprung 74 aufweist, der in der Einbauposition benachbart zu der Stange 5 angeordnet ist.

Ferner sind an dem Schnellbefestigungselement 70 zwei Buckel 77 und 78 vorgesehen, die als Verbindungsstellen mit der Ausziehführung 4 entsprechend der Materialdicke des Halteelementes 76 erhaben ausgestellt sind.

Die gezeigten Schnellbefestigungselemente können aus einem gestanzten und gebogenen Metallblech hergestellt sein, aber auch eine Ausbildung ganz oder teilweise aus verschiendenen Metallen bzw. aus Kunststoff ist möglich. An dem Schnellbefestigungselement kann eine Führungsschiene durch Schweißen oder Kleben oder andere Befestigungsmittel unterseitig oder seitlich abgewandt zur Garraummitte festgelegt sein.

### Bezugszeichenliste

- 1: Backofen
- 2: Seitenwand
- 3: Gitterartiges Seitenteil
- 4: Ausziehführung
- 5: Stange
- 6: Endabschnitt
- 7: Führungsschiene
- 8: Anlagekante
- 9: Rechteckloch
- 10: Schnellbefestigungselement
- 10': Schnellbefestigungselement
- 10"': Schnellbefestigungselement
- 11: Erste Klammer
- 12: Zweite Klammer
- 13: Rastelement
- 14: Vorsprung
- 15: Anschlag
- 15': Anschlag
- 15": Anschlag
- 16: Steg
- 16': Steg
- 16": Steg
- 17: Griffleiste
- 17': Griffleiste
- 18: Befestigungsabschnitt
- 19: Steg
- 20: Schnellbefestigungselement
- 21: Erste Klammer
- 22: Zweite Klammer
- 23: Rastelement
- 24: Vorsprung
- 25: Rand
- 26: Öffnung
- 27: Vorsprung / Griffabschnitt
- 28: Platte
- 30: Schnellbefestigungselement
- 31: Erste Klammer
- 32: Zweite Klammer
- 33: Stegförmiges Rastelement
- 34: Schenkel
- 35: Anschlag
- 36: Wand
- 37: Halteelement
- 38: Verbindungssteg
- 39: Schenkel
- 40: Schnellbefestigungselement
- 41: Erste Klammer
- 42: Zweite Klammer
- 43: Rastelement
- 44: Vorsprung
- 45: Clip
- 46: Endabschnitt
- 47: Vertiefung
- 48: Befestigungsabschnitt
- 50: Schnellbefestigungselement
- 51: Erste Klammer
- 52: Zweite Klammer
- 53: Stegförmiges Rastelement
- 54: Stufe
- 55: Anschlag
- 56: Befestigungssteg
- 57: Plattenförmiger Befestigungsabschnitt
- 58: Endabschnitt
- 60: Schnellbefestigungselement
- 61: Erste Klammer
- 62: Zweite Klammer
- 63: Rastelement
- 65: Anschlag
- 66: Steg
- 67: Aufnahme
- 70: Schnellbefestigungselement
- 71: Erste Klammer
- 72: Zweite Klammer
- 73: Rastelement
- 74: Vorsprung
- 75: Anschlag
- 76: Halteelement
- 77: Buckel
- 78: Buckel

## Patentansprüche

1. Schnellbefestigungselement (10, 10', 10", 20, 30, 40, 50, 60, 70) zur Befestigung einer Führungsschiene (7) an einer Stange (5) eines gitterartigen Seitenteils (3), insbesondere für Backöfen, wobei die Stange (5) einen zu einer Längsrichtung winklig abgebogenen Endabschnitt (6) aufweist und das Schnellbefestigungselement (10, 10', 10", 20, 30, 40, 50, 60, 70) mit einer ersten Klammer (11, 21, 31, 41, 51, 61, 71) einen in Längsrichtung angeordneten Abschnitt der Stange (5) zumindest teilweise umgreift und mit einer zweiten Klammer (12, 22, 32, 42, 52, 62, 72) den abgebogenen Endabschnitt (6) zumindest teilweise umgreift, wobei ein federndes Rastelement (13, 23, 33, 43, 53, 63, 73) vorgesehen ist, das die Stange (5) hintergreift, **dadurch gekennzeichnet, dass** an dem Schnellbefestigungselement (10, 20, 30, 40, 50, 60, 70) ein Anschlag (15, 25, 35, 47, 55, 65, 75) zur Begrenzung des Schwenkweges des Rastelementes (13, 23, 33, 43, 53, 63, 73) vorgesehen ist.

2. Schnellbefestigungselement nach Anspruch 1, **dadurch gekennzeichnet, dass** der Anschlag (15, 25, 35, 47, 55, 65, 75) so angeordnet ist, dass das Rastelement (13, 23, 33, 43, 53, 63, 73) in einem elastischen Bereich federnd verschwenkbar ist.

3. Schnellbefestigungselement nach Anspruch 1 oder 2, **dadurch gekennzeichnet, dass** der Anschlag (15, 25, 35, 47, 55) integral mit dem Schnellbefestigungselement ausgebildet ist.

4. Schnellbefestigungselement nach einem der Ansprüche 1 bis 3, **dadurch gekennzeichnet, dass** der Anschlag (15, 25, 35, 47, 55, 65) als Steg ausgebildet ist, der integral mit der ersten oder zweiten Klammer (11, 12) ausgeformt ist.

5. Schnellbefestigungselement nach einem der Ansprüche 1 bis 4, **dadurch gekennzeichnet, dass** der Anschlag (15, 25, 35, 47, 55, 65, 75) als Steg ausgebildet ist, der beabstandet von dem Rastelement (13, 23, 33, 43, 53, 63, 73) positioniert ist.

6. Schnellbefestigungselement nach einem der Ansprüche 1 bis 5, **dadurch gekennzeichnet, dass** das Rastelement (13, 23, 33, 43, 53, 63, 73) als federnde Rastzunge mit einem endseitigen Vorsprung (14, 24, 34, 44, 54, 64, 74) ausgebildet ist.

7. Schnellbefestigungselement nach einem der Ansprüche 1 bis 6, **dadurch gekennzeichnet, dass** die Schwenkachse des Rastelementes (13, 23, 33, 43, 53, 63, 73) parallel zu dem abgebogenen Endabschnitt (6) angeordnet ist.

8. Schnellbefestigungselement nach einem der Ansprüche 1 bis 7, **dadurch gekennzeichnet, dass** an dem Rastelement (23) ein Vorsprung (27) ausgebildet ist, der eine Öffnung (26) an der ersten oder zweiten Klammer (21, 22) durchgreift.

9. Schnellbefestigungselement nach Anspruch 8, **dadurch gekennzeichnet, dass** die Öffnung (26) als Langloch ausgebildet ist und der Vorsprung (27) innerhalb der Öffnung (26) bewegbar ist.

10. Schnellbefestigungselement nach einem der Ansprüche 1 bis 9, **dadurch gekennzeichnet, dass** der Anschlag als separates Bauteil an einer der Klammern (31, 32; 61, 62) festgelegt ist.

11. Schnellbefestigungselement nach Anspruch 10, **dadurch gekennzeichnet, dass** der Anschlag (35, 65) rastend oder klemmend an der ersten oder zweiten Klammer festgelegt ist.

12. Schnellbefestigungselement nach einem der Ansprüche 1 bis 12, **dadurch gekennzeichnet, dass** an dem Rastelement (13, 23, 33, 43, 53, 63, 73) ein Griffabschnitt (17,17', 27) ausgebildet ist.

13. Schnellbefestigungselement nach einem der Ansprüche 1 bis 12, **dadurch gekennzeichnet, dass** das Befestigungselement aus einem gestanzten und gebogenen Metallblech hergestellt ist.

## Claims

1. A quick-action fastening element (10, 10', 10", 20, 30, 40, 50, 60, 70) for fastening a guide rail (7) on a rod (5) of a grid-like side part (3), in particular for ovens, the rod (5) having an end section (6) bent over at an angle to a longitudinal direction, and the quick-action fastening element (10, 10', 10", 20, 30, 40, 50, 60, 70) at least partially enclosing a section of the rod (5) in the longitudinal direction using a first clamp (11, 21, 31, 41, 51, 61, 71) and at least partially enclosing the bent-over end section (6) using a second clamp (12, 22, 32, 42, 52, 62, 72), a springy locking element (13, 23, 33, 43, 53, 63, 73) being provided, which engages behind the rod (5), **characterized in that** a stop (15, 25, 35, 47, 55, 65, 75) is provided on the quick-action fastening element (10, 20, 30, 40, 50, 60, 70) to limit the pivot pathway of the locking element (13, 23, 33, 43, 53, 63, 73).

2. The quick-action fastening element according to Claim 1, **characterized in that** the stop (15, 25, 35, 47, 55, 65, 75) is situated so that the locking element (13, 23, 33, 43, 53, 63, 73) is pivotable in a springy manner in an elastic range.

3. The quick-action fastening element according to Claim 1 or 2, **characterized in that** the stop (15, 25, 35, 47, 55) is integrally formed with the quick-action fastening element.

4. The quick-action fastening element according to one of Claims 1 to 3, **characterized in that** the stop (15, 25, 35, 47, 55, 65) is formed as a web which is shaped integrally with the first or second clamp (11, 12).

5. The quick-action fastening element according to one of Claims 1 to 4, **characterized in that** the stop (15, 25, 35, 47, 55, 65, 75) is formed as a web, which is positioned at a distance from the locking element (13, 23, 33, 43, 53, 63, 73).

6. The quick-action fastening element according to one of Claims 1 to 5, **characterized in that** the locking element (13, 23, 33, 43, 53, 63, 73) is formed as a springy locking tongue having a terminal projection (14, 24, 34, 44, 54, 64, 74).

7. The quick-action fastening element according to one of Claims 1 to 6, **characterized in that** the pivot axis of the locking element (13, 23, 33, 43, 53, 63, 73) is situated parallel to the bent-over end section (6).

8. The quick-action fastening element according to one of Claims 1 to 7, **characterized in that** a projection (27) is formed on the locking element (23), which engages through an opening (26) on the first or second clamp (21, 22).

9. The quick-action fastening element according to Claim 8, **characterized in that** the opening (26) is formed as an oblong hole and the projection (27) is movable within the opening (26).

10. The quick-action fastening element according to one of Claims 1 to 9, **characterized in that** the stop is fixed as a separate component on one of the clamps (31, 32; 61, 62).

11. The quick-action fastening element according to Claim 10, **characterized in that** the stop (35, 36) is fixed by locking or clamping on the first or second clamp.

12. The quick-action fastening element according to one of Claims 1 to 12, **characterized in that** a handle section (17, 17', 27) is formed on the locking element (13, 23, 33, 43, 53, 63, 73).

13. The quick-action fastening element according to one of Claims 1 to 12, **characterized in that** the fastening element is produced from a stamped and bent metal sheet.

## Revendications

1. Elément de fixation rapide (10, 10', 10", 20, 30, 40, 50, 60, 70) pour permettre de fixer un rail de guidage (7) à une tige (5) d'une pièce latérale (3) en forme de grille, en particulier pour des fours, dans lequel la tige (5) comporte un tronçon d'extrémité (6) cintré angulairement par rapport à la direction longitudinale, et, l'élément de fixation rapide (10, 10', 10", 20, 30, 40, 50, 60, 70) entourant au moins partiellement par une première pince (11, 21, 31, 41, 51, 61, 71) un tronçon de la tige (5) s'étendant en direction longitudinale, et par une seconde pince (12, 22, 32, 42, 52, 62, 72) le tronçon d'extrémité cintrée (6), dans lequel il est prévu un élément d'enclipsage élastique (13, 23, 33, 43, 53, 63, 73) qui vient en prise par l'arrière avec la tige (5),
**caractérisé en ce qu'**
il est prévu sur l'élément de fixation rapide (10, 20, 30, 40, 50, 60, 70) une butée (15, 25, 35, 47, 55, 65, 75) permettant de limiter la course de pivotement de l'élément d'enclipsage (13, 23, 33, 43, 53, 63, 73).

2. Elément de fixation rapide conforme à la revendication 1,
**caractérisé en ce que**
la butée (15, 25, 35, 47, 55, 65, 75) est montée de sorte que l'élément d'enclipsage (13, 23, 33, 43, 53, 63, 73) puisse pivoter élastiquement dans une plage élastique.

3. Elément de fixation rapide conforme à la revendication 1 ou 2,
**caractérisé en ce que**
la butée (15, 25, 35, 47, 55) est réalisée intégralement avec l'élément de fixation rapide.

4. Elément de fixation rapide conforme à l'une des revendications 1 à 3,
**caractérisé en ce que**
la butée (15, 25, 35, 47, 55, 65) est réalisée sous la forme d'une barrette formée intégralement avec la première ou la seconde pince (11, 12).

5. Elément de fixation rapide conforme à l'une des revendications 1 à 4,
**caractérisé en ce que**
la butée (15, 25, 35, 47, 55, 65, 75) est réalisée sous la forme d'une barrette qui est située à distance de l'élément d'enclipsage (13, 23, 33, 43, 53, 63, 73).

6. Elément de fixation rapide conforme à l'une des revendications 1 à 5,
**caractérisé en ce que**
l'élément d'enclipsage (13, 23, 33, 43, 53, 63, 73) est réalisé sous la forme d'une languette d'enclipsage élastique munie d'une saillie d'extrémité (14, 24, 34, 44, 54, 64, 74).

7. Elément de fixation rapide conforme à l'une des revendications 1 à 6,
**caractérisé en ce que**
l'axe de pivotement de l'élément d'enclipsage (13, 23, 33, 43, 53, 63, 73) est parallèle au tronçon d'extrémité cintré (6).

8. Elément de fixation rapide conforme à l'une des revendications 1 à 7,
**caractérisé en ce que**
sur l'élément d'enclipsage (23) est formée une saillie (27) pénètre dans une ouverture (26) de la première ou de la seconde pince (21, 22).

9. Elément de fixation rapide conforme à la revendication 8,
**caractérisé en ce que**
l'ouverture (26) est réalisée sous la forme d'un trou oblong et la saillie (27) est mobile à l'intérieur de l'ouverture (26).

10. Elément de fixation rapide conforme à l'une des revendications 1 à 9,
**caractérisé en ce que**
la butée est fixée sur l'une des pinces (31, 32, 61, 62) en tant qu'élément séparé.

11. Elément de fixation rapide conforme à la revendication 10,
**caractérisé en ce que**
la butée (35, 65) est enclipsée ou bloquée sur la première ou la seconde pince.

12. Elément de fixation rapide conforme à l'une des revendications 1 à 12,
**caractérisé en ce que**
sur l'élément d'enclipsage (13, 23, 33, 43, 53, 63, 73) est formé un tronçon de mise en prise (17, 17', 27).

13. Elément de fixation rapide conforme à l'une des revendications 1 à 12,
**caractérisé en ce que**
l'élément de fixation est fabriqué à partir d'une tôle métallique estampée et cintrée.
